# EUROPEAN PATENT APPLICATION

(11) **EP 2 363 431 A1**
(43) Date of publication of application: **07.09.2011**
(21) Application number: 10425049.3
(22) Date of filing: 25.02.2010
(51) Int. Cl.: C08K 5/098, C08L 27/06

(54) **Composition comprising alkali metal carboxylates for stabilizing halogen-containing polymers**

(71) Applicant: Reagens S.p.A., 40016 S. Giorgio Di Piano (IT)
(72) Inventor: The designation of the inventor has not yet been filed
(74) Representative: Cattaneo, Elisabetta

(57) **Abstract**

The invention relates to a composition for stabilizing halogen-containing polymers comprising an alkali metal salt of adipic acid and an alkali metal salt of a carboxylic acid having from 1 to 22 carbon atoms. Formulations of plasticized or rigid resin comprising the composition of the invention and the halogen-containing polymer are also described.

## Description

### Field of the invention

The invention relates to a composition for stabilizing halogen-containing polymers, in particular polyvinyl chloride (PVC), and to halogenated resins in rigid and plasticized formulations comprising said stabilizing compositions. More specifically, the invention relates to a composition comprising an alkali metal salt of adipic acid and an alkali metal salt of a carboxylic acid having from 1 to 22 carbon atoms able to provide the final halogenated resin with excellent thermal stability.

### State of the art

Halogen-containing polymers are known to be processed at high temperatures to produce final articles of interest. The temperatures involved however can generate a dehydrochlorination reaction which causes polymer degradation and is apparent from a change in colour and a loss of its physical and chemical properties.

It is therefore of fundamental importance to stabilize PVC.

For this purpose, product mixtures containing primary stabilizers are known, i.e. substances able to retard or block the dehydrochlorination reaction, as are secondary stabilizers, i.e. substances acting as hydrochloric acid scavengers once the degradation process has commenced.

Primary stabilizers include metal soaps and organometallic compounds (Plastic Additives Handbook, R.Gatcherand H.Muller, Carl Hanser Verlag, 5th Edition, 2001, pages 442-456). Metal-containing thermal stabilizers include compounds in which the metal is lithium, sodium, potassium, magnesium, calcium, strontium, cadmium, barium, manganese, aluminium, tin, lead, bismuth or antimony. The use of traditional stabilizers based on toxic metals such as lead, barium or cadmium is now outdated and has been replaced by the development of toxic metal free stabilizers such as those based, for example, on combinations of metal soaps of calcium and zinc.

The document FR2289555 describes for example a stabilization mixture for chlorinated plastic materials comprising calcium or zinc salts of linear or branched saturated aliphatic monocarboxylic acids, preferably C₆-C₁₈ aliphatic monocarboxylic acids, and liquid organic phosphites.

Organometallic compounds can also be mentioned such as organotin compounds which generally offer such a high performance that it is normally difficult to further increase efficiency.

There is however still a requirement for new stabilizing mixtures or new molecules presenting considerable thermal stabilization capacity while being simultaneously industrially advantageous from both the industrial scalability and cost viewpoints. The use of sodium carboxylates such as disodium adipate to stabilize polyvinyl chloride is known from US 5100946.

As disodium adipate presents high efficiency in stabilizing PVC, it is currently a stabilizing agent of considerable interest.

The object of the present invention is therefore to thermally stabilize halogen-containing polymers particularly during processing, hence retarding degradation during processing without compromising the normal processing stages of the halogen-containing polymer.

### Summary of the invention

The aforestated object has hence been attained by means of a composition for stabilizing halogen-containing polymers comprising an alkali metal salt of adipic acid and an alkali metal salt of a carboxylic acid having from 1 to 22 carbon atoms.

According to another aspect, the invention relates to a process for preparing the composition of the invention comprising the steps of:
a) preparing a mixture of an alkali metal salt of adipic acid and an alkali metal salt of a carboxylic acid having from 1 to 22 carbon atoms;
b) removing the water from the mixture thus obtained and drying the product thus obtained;
c) grinding the dried product, to obtain a powder with a particle size distribution having D90 less than or equal to 40 µm and D50 less than or equal to 6 µm.

According to yet a further aspect, the invention relates to a halogenated resin in rigid or plasticized formulation comprising a halogen-containing polymer and the composition of the invention.

In a preferred embodiment, the halogen-containing polymer is polyvinyl chloride (PVC) or chlorinated polyvinyl chloride (C-PVC).

### Description of the figures

The invention is described in detail hereinafter with reference to the accompanying figures in which:
Figure 1 shows the graph of the results of thermal stabilization evaluation by means of evaluating the yellowing index (Yl) over time of the example 10;
Figure 2 shows the graph of the results of thermal stabilization evaluation by means of evaluating the yellowing index (Yl) over time of the example 11;
Figure 3 shows the graph of the results of thermal stabilization evaluation by means of evaluating the yellowing index (Yl) over time of the example 12;
Figure 4 shows the graph of the results of thermal stabilization evaluation by means of evaluating the yellowing index (Yl) over time of the example 13;
Figure 5 shows the graph of the results of thermal stabilization evaluation by means of evaluating the yellowing index (Yl) over time of the example 14.

### Detailed description of the invention

The invention therefore relates to a composition for stabilizing halogen-containing polymers comprising an alkali metal salt of adipic acid and an alkali metal salt of a carboxylic acid having from 1 to 22 carbon atoms.

In the present invention, the term:
- "halogen-containing polymer" means polyvinyl halides, including vinyl chloride polymers; more preferably the halogen-containing polymer is polyvinyl chloride or chlorinated polyvinyl chloride (C-PVC);
- "halogenated resin in a rigid formulation" means a halogen-containing polymer formulation substantially free of plasticizer compounds; and
- "halogenated resin in a plasticized formulation" means a halogen-containing polymer formulation with added plasticizer compounds.

The ingredient amounts of the composition of the invention are expressed in parts by weight per 100 parts by weight of the halogen-containing polymer in the final halogenated resin in rigid or plasticized formulation.

Preferably the alkali metal of the adipic acid salt is selected from the group consisting of sodium, potassium and lithium, more preferably it is sodium. Preferably the alkali metal of the carboxylic acid salt having from 1 to 22 carbon atoms, i.e. of a C1-C22 carboxylic acid, is selected from the group consisting of sodium, potassium and lithium, more preferably it is sodium.

The C1-C22 carboxylic acid is preferably an acid selected from the C1-C2, C8-C22 group. It is preferably selected from the group consisting of formic acid, acetic acid, lauric acid, stearic acid, palmitic acid, stearine (a mixture of stearic and palmitic acid), oleic acid, linoleic acid, linolenic acid, caprylic acid, and even more preferably caprylic acid (n-octanoic acid). Advantageously the C1-C22 carboxylic acid salt is sodium caprylate.

Advantageously in a preferred embodiment the composition for stabilizing the halogen-containing polymers comprises a) disodium adipate and b) sodium carboxylate of a C1-C22 carboxylic acid. More advantageously the composition for stabilizing the halogen-containing polymers comprises disodium adipate and sodium caprylate.

The composition of the invention comprises as essential element the alkali metal salt of a C1-C22 carboxylic acid. It is present in the composition in an amount preferably within the range from 0.005 to 1.5 parts by weight, more preferably from 0.01 to 0.45 parts by weight per 100 parts by weight of a halogen-containing polymer (phr).

The weight ratio of the adipic acid salt and the C1-C22 carboxylic acid salt in the stabilizing composition is preferably within the range from 70:30 to 98:2, and more preferably from 80:20 to 97:3.

The stabilizing composition of the invention comprises an alkali metal salt of adipic acid. It is preferably present from 0.045 to 3.5 parts by weight, more preferably from 0.14 to 1.05 parts by weight per 100 parts by weight of a halogen-containing polymer (phr).

Surprisingly, in the preferred embodiment the inventors of the present invention have enabled the disodium adipate performance to be improved by providing a composition for stabilizing halogen-containing polymers with an alkali metal salt of a C1-C22 carboxylic acid. In particular the aforesaid combination has not only improved the efficiency of existing compositions but has also reduced the cost.

According to another aspect, the invention concerns a process for preparing the composition of the invention comprising the steps of:
a) preparing a mixture of an alkali metal salt of adipic acid and a alkali metal salt of a carboxylic acid having from 1 to 22 carbon atoms;
b) removing the water from the mixture thus obtained and drying the product thus obtained;
c) grinding the dried product, to obtain a powder with a particle size distribution having D90 less than or equal to 40 µm and D50 less than or equal to 6 µm.

In step c) the powder, after being ground, can be subjected to classification, i.e. a process of separating out the coarse particles by means of a cyclone separator such as to obtain a product containing less than 0.1% by weight of particles with average diameter greater than 66 µm. Preferably the particle size distribution of the powder in step c) presents a D90 within the range from 15 to 30 µm and a D50 within the range 0.5 to 5 µm.

The composition of the invention can also comprise one or more conventional stabilizing and co-stabilizing excipient agents selected from the group consisting of metal soaps, organotin compounds, perchlorates and perfluoroalkanesulphonates, sodium adipate, antioxidants, alkanolamines, zeolites and hydrotalcites, hydrates and oxides of alkali and alkaline-earth metals, polyols, organic phosphites, β-aminocrotonic acid esters and organic co-stabilizers such as β-diketones, acetylacetonates, dihydropyridines, polydihydropyridines and uracil derivatives. These stabilizing and co-stabilizing excipients can be added either to the mixture of the invention in step a) or afterwards together with the halogen-containing polymer, preferably added afterwards together with the halogen-containing polymer in the final resin in rigid or plasticized formulation.

The stabilizing excipient is preferably contained in the stabilization composition of the invention in an amount within the range from 0.05 to 5 parts by weight of halogen-containing polymer. Preferably the stabilizing excipients contained in the composition of the invention are combinations of metal soaps and/or organotin compounds, polyols, antioxidants and organic stabilizers.

The following can be cited as non-limiting examples of stabilizing excipients:

### Metal soaps

All metal soaps used as polyvinyl chloride (PVC) stabilizers are suitable for the invention. These are preferably organic sodium, lithium, potassium, calcium, zinc, magnesium, aluminium salts of saturated C₂-C₂₂ aliphatic carboxylates, unsaturated C₃-C₂₂ aliphatic carboxylates, saturated C₂-C₂₂ aliphatic carboxylates substituted with at least one OH group, or whose chain is interrupted by at least one oxygen atom (oxyacids), cyclic or bicyclic carboxylates containing from 5 to 22 carbon atoms, phenylcarboxylates, unsubstituted or substituted with at least one OH group and/or substituted with C₁-C₁₆ alkyl, naphthylcarboxylates, unsubstituted or substituted with at least one OH group and/or substituted with C₁-C₁₆ alkyl, phenyl (C₁-C₁₆) alkylcarboxylates, naphthyl (C₁-C₁₆) alkylcarboxylates, or phenolates, unsubstituted or substituted with C₁-C₁₂ alkyl.

Among these, the following can be cited: metal salts of monovalent carboxylic acids such as acetic acid, propionic acid, butyric acid, valeric acid, hexanoic acid, n-heptanoic acid, octanoic acid, neodecanoic acid, 2-ethylhexanoic acid, nonanoic acid, decanoic acid, undecanoic acid, dodecanoic acid, tridecanoic acid, myristic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl4-hydroxybenzoic acid, toluic (methylbenzoic) acid, dimethylbenzoic acid, ethylbenzoic acid, n-propylbenzoic acid, salicylic acid, p-tert-octylsalicylic acid and sorbic acid; metal salts of bivalent or monoesterified carboxylic acids such as oxalic acid, malonic acid, succinic acid, glutaric acid, adipic acid, fumaric acid, pentane-1,5-dicarboxylic acid, hexane-1,6-dicarboxylic acid, heptane-1,7-dicarboxylic acid, octane-1,8-dicarboxylic acid, 3,6,9-trioxadecane-1,10-dicarboxylic acid, lactic acid, malonic acid, maleic acid, tartaric acid, oxalic acid, salicylic acid, phthalic acid, isophthalic acid, terephthalic acid, hydroxyphthalic acid, and the diesters or triesters of tri- or tetra-valent carboxylic acids such as hemimellitic acid, trimellitic acid, pyromellitic acid, citric acid, and metal salts of mono- or di-esterified phosphoric acid or monoesterified phosphorous acid as described in JP3275570; and colophonic acids (rosin acids such as abietic acid), and superbasic carboxylates.

Metal soaps preferred in the present invention are metal carboxylates of a carboxylic acid containing from 2 to 25 carbon atoms, being typically, acetates, benzoates, or alkanoates, and preferably C8-alkanoates, stearates, oleates, laurates, palmitates, behenates, versatates, hydroxystearates, dihydroxystearates, p-tert-butylbenzoates, and 2-ethylhexanoates.

According to the invention, a mixture of carboxylates of different structure can also be used as metal soaps. Preference is given to the compositions as aforedescribed containing sodium, zinc and/or calcium soaps.

Zn, Li, K, Mg, Ca, Na salts of the aforestated fatty acids containing from 2 to 25 carbon atoms are preferably added to the composition of the invention.

The aforedescribed metal soaps or metal soap mixture can be present in the composition preferably in an amount within the range from 0.05 to 3 parts by weight, more preferably from 0.1 to 1.0 parts by weight, per 100 parts by weight of polymer.

### Organotin compounds

Organotin compounds are a particularly well known and extensively used class of metal-containing thermal stabilizers for halogenated vinyl polymers. This class comprises compounds containing one or more tetravalent tin atoms, each of which has at least one direct tin-carbon bond. A preferred class of tin-containing thermal stabilizers presents one or more tetravalent tin atoms, each of which has at least one direct tin-oxygen or tin-sulphur bond, i.e. containing the group:

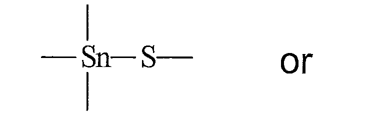

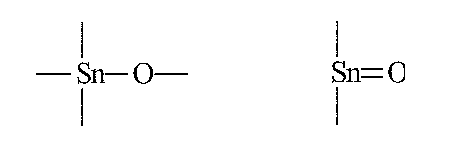

The organotin compounds preferred in the invention comprise those containing one or more tetravalent tin atoms having at least one direct tin-carbon bond and in which the remaining valencies are satisfied by bonds with oxygen or sulphur, as in the case of a residue resulting from the removal of a hydrogen bound to the sulphur of a mercaptan, mercaptoalcohol, mercaptoacid or mercaptoalcohol ester or as in the case of a residue resulting from the removal of a hydrogen bound to the oxygen of a carboxylic acid or alcohol or hydrohalogen acid, on condition that at least one valency is satisfied by a bond with oxygen or sulphur or a mixture of the two. Examples of compounds of this type are: alkyl tin mercaptides, the product of reacting an organotin halide with a sulphide of an alkali metal and mercaptide, mercaptoacid ester, mercaptoalcohol, mercaptoalcohol ester or mixtures thereof.

Another class of tin-containing stabilizers included in the present invention is that of non-sulphur-containing compounds in which the tin is bound to oxygen. This group includes, by way of non-limiting example, dibutyltin maleate, dibutyltin di(stearyl maleate), dioctyltin maleate, organotin carboxylates or organotin alkoxides.

The stabilizing composition of the present invention can comprise organotin compounds preferably in an amount within the range from 0.1 to 4 parts by weight, more preferably from 0.15 to 2.0 parts by weight, per 100 parts by weight of polymer.

### Non-metal stabilizers

Among metal-free stabilizers esters of β-aminocrotonic acid can be cited.

Considered suitable among these compounds are for example β-aminocrotonic acid stearyl ester, 1,4 butanediol di(β-aminocrotonic acid) ester, thio-diethanol-β-aminocrotonic acid ester.

### Perchlorates and perfluoroalkanesulphonates

The polymer stabilizing composition can also comprise a compound selected from the group consisting of M(ClO₄)ₖ and (CF₃SO₃)ₙM in which M is selected from the group consisting of H⁺, Li⁺, Na⁺, K⁺, Mg²⁺, Ca²⁺, Ba²⁺, Zn²⁺, Al³⁺ and NH₄⁺ and k and n are 1, 2 or 3 depending on the valency of M.

M is preferably selected from the group consisting of Li⁺, Na⁺, K⁺, Mg²⁺, Ca²⁺ and Zn²⁺, more preferably M is selected from the group consisting of Na⁺, K⁺ and Ca²⁺, and still more preferably is sodium.

The perchloric acid or perchlorate salt, preferred for the purposes of the invention, can be used in various forms, for example preparations such as salts or aqueous or organic solutions, supported on various materials such as PVC, calcium silicate, zeolites or hydrotalcites or bound to a hydrotalcite by chemical reaction. Furthermore, the preferred perchlorates of the invention are complexes of metal perchlorate, more preferably sodium perchlorate, with triethylene glycol, butyldiglycol or polyethylene glycol.

The perchloric acid or its salt is preferably included in the composition of the invention in an amount within the range from 0.001 to 2 parts by weight, more preferably from 0.005 to 1 part by weight, per 100 parts of polymer.

The stabilizing composition of the invention can also comprise (CF₃SO₃)ₙM. Advantageously, (CF₃SO₃)ₙM is trifluoromethanesulphonic acid or a sodium salt thereof, more preferably it being sodium trifluoromethanesulphonate.

The composition of the invention can also comprise other additives/excipients able to behave as co-stabilizers, selected from the group consisting of antioxidants, organic co-stabilizers (β-diketones and dihydropyridines or polydihydropyridines, uracil derivatives), alkanolamines, zeolites and hydrotalcites, polyols, hydrates and oxides of alkali and alkaline-earth metals and organic phosphites.

### Antioxidants

The organic antioxidants used in the present invention are selected from those already known as additives for plastic materials. For the purposes of the invention, preferred are one or more antioxidants selected from the group consisting of alkylidene-bisphenols, esters of β-(3,5-di-tert-butyl-4-hydroxyphenyl)propionic acid with mono- or poly-alcohols, esters of β-(5-tert-butyl-4-hydroxy-3-methylphenyl)propionic acid with mono- or poly-alcohols, esters of β-(3,5-dicyclohexyl-4-hydroxyphenyl)propionic acid with mono- or poly-alcohols. Particularly preferred according to the invention are 2,2'-methylene-bis(6-tert-butyl-4-methylphenol), commercially available as Lowinox® 22 M46 produced by Chemtura, and esters of β-(3,5-di-tert-butyl-4-hydroxyphenyl)propionic acid with octadecanol and with pentaerythritol, respectively Arenox® A76 and Arenox® A10, produced by Reagens, and bisphenol A.

The aforedescribed antioxidants, if present, are preferably included in an amount within the range from 0.01 to 1.0 parts by weight, more preferably from 0.1 to 0.5 parts by weight, per 100 parts by weight of polymer.

### Organic co-stabilizers

The invention also provides for the optional presence of organic co-stabilizers in the composition of the invention to further increase the effectiveness of the stabilizing composition. The organic co-stabilizers optionally present in the stabilizing composition of the invention are preferably one or more compounds selected from: 1) β-diketonic compounds, 2) dihydropyridines or polydihydropyridines, 3) uracil derivatives.
*1. β-Diketonic compounds:* The 1,3-dicarbonyl compounds advantageously present in the composition of the invention are linear or cyclic dicarbonyl compounds. Of these, particularly preferred are the dicarbonyl compounds of formula: 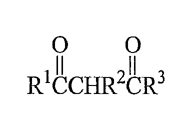 wherein
   R¹ is C₁-C₂₂ alkyl, C₅ -C₁₀ hydroxyalkyl, C₃-C₇ alkenyl, phenyl, phenyl substituted with OH, by C₁-C₄ alkyl or by C₁-C₄ halogenalkyl, C₇-C₁₀ phenylalkyl, C₅ -C₁₂ cycloalkyl, C₅-C₁₂ cycloalkyl substituted with C₁-C₄ alkyl.
   R² is hydrogen, C₁-C₈ alkyl, C₃-C₇ alkenyl, C₂-C₁₂ phenyl, C₇-C₁₂ alkylphenyl, C₇-C₁₀ phenylalkyl,
   R³ has the same meaning as given to R¹.
   Particularly preferred are dibenzoylmethane, stearoylbenzoylmethane and dehydroacetic acid and acetylacetone complexes with metals such as Ca and Zn.
*2. Dihydropyridines (DHP)* Preferred monomeric dihydropyridine derivatives according to the invention include carboxylic acids esters the formula of which can be generally indicated by: 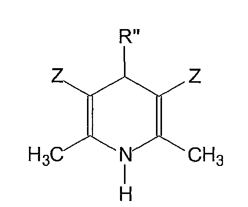 wherein Z is CO₂C₂H₅, CO₂(n-C₁₂H₂₅), R" is hydrogen, C₁-C₁₈ alkyl, C₂ -C₁₈ alkoxycarbonyl or C₆ -C₁₀ aryl.
   Particularly preferred are 3-bisdodecyloxycarbonyl-2,6-dimethyl-1,4-dihydropyridine, commercially available as Stavinor® D507.
*3. Uracil derivatives*
   The uracil derivatives advantageously present in the composition of the invention are described by the following general formula: 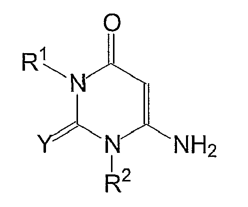 wherein
   R¹ and R² are, each independently of the other, hydrogen, C₁-C₁₂ alkyl, C₃-C₆ alkenyl, C₅-C₈ cycloalkyl optionally substituted with 1 to 3 C₁-C₄ alkyl, C₁-C₄ alkoxy, C₅-C₈ cycloalkyl or hydroxyl or with chlorine atoms, or C₇-C₉ phenylalkyl optionally substituted on the phenol ring with 1 to 3 C₁-C₄ alkyl, C₁-C₄ alkoxy, C₅-C₈ cycloalkyl or hydroxyl or with chlorine atoms; Y can be oxygen or sulphur. Examples of C₁₋C₄ alkyl are methyl, ethyl, n-propyl, isopropyl, n-, iso-, sec-, or tert-butyl.

Examples of C₁-C₁₂ alkyl are, in addition to the aforementioned radicals, pentyl, hexyl, heptyl, octyl, 2-ethylhexyl, isooctyl, nonyl, decyl, undecyl, dodecyl. Examples of C₁-C₄ alkoxy are methoxy, ethoxy, propoxy, isopropoxy, butoxy, isobutoxy.

Examples of C₅-C₈ cycloalkyl are cyclopentyl, cyclohexyl, cycloheptyl, cyclooctyl.

Examples of C₇-C₉ phenylalkyl are benzoyl, 1- or 2- phenylethyl, 3-phenylpropyl, a,a-dimethylbenzyl, or 2-phenylisopropyl, preferably benzyl. If the cycloalkyl or phenyl groups of the phenylalkyl radical are substituted, then they are substituted with one or two substituents, preferably selected from chlorine, hydroxyl, methyl or methoxy.

Examples of C₃-C₆ alkenyl are allyl, methallyl, 1-butenyl, or 1-hexanyl, preferably allyl.

Preferred are the compounds of the aforestated formula, in which R¹ and R² are, each independently of the other, C₁-C₄ alkyl and hydrogen; in particular, the compound in which R¹ and R² are methyl is preferred.

Among the uracil derivatives there can also be optionally present in the composition of the invention oligomeric or polymeric derivatives of formula: 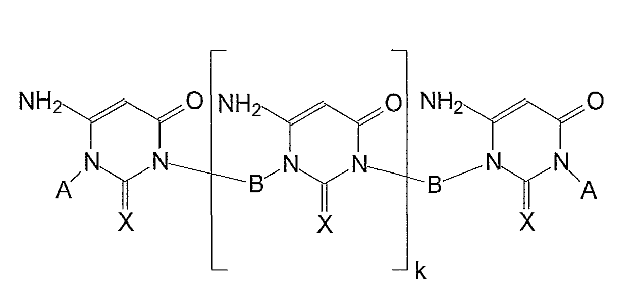 wherein
A is n-octyl, n-octadecyl, oleyl, phenyl, cyclohexyl or 3-hydroxyphenyl and
B is hexamethylene, 3-methylene-3,5,5,trimethylcyclohexan-1-yl, 4,4'-methylene-bis-cyclohexyl, 4,4'-methylene -bis-phenyl,
X is oxygen, or
if A is phenyl and B is hexamethylene, then X is sulphur;
k varies from 0 to 17, preferably from 0 to 2. The oligomer derivatives described above are preferred in the invention.

The aforedescribed organic antioxidants can be present preferably in an amount within the range from 0.01 to 1.0 parts by weight, in particular from 0.1 to 0.5 parts by weight, per 100 parts by weight of polymer.

### Alkanolamines

Alkanolamines, advantageously present in the composition of the invention, are compounds of general formula: 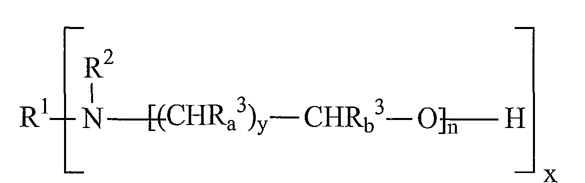 wherein
x=1,2,3
y=1,2,3,4,5 or 6
n=1-10
R¹ and R² are independently H, C₁-C₂₂ alkyl, 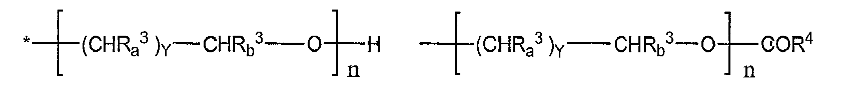
C₂-C₂₀ alkenyl, C₂-C₁₈ acyl, C₄-C₈ cycloalkyl, which can also be hydroxyl-substituted in position β, C₆-C₁₀ aryl, C₇-C₁₀ arylalkyl or alkylaryl, or if x=1, then R¹ and R² can be additionally combined with nitrogen to form a cyclo of 4-10 carbon atoms and optionally up to 2 heteroatoms, or if x=2, then R¹ can additionally be C₂-C₁₈ alkylene, which can be hydroxyl-substituted at both carbon atoms in β and/or can be interrupted by one or more NR groups;
Rₐ³, R_{b}³ are independently C₁-C₂₂ alkyl, C₂-C₆ alkenyl, C₆-C₁₀ aryl, H or CH₂―X― R⁵, where X is oxygen, sulphur, -O-CO- or CO-O-;
R⁴ is C₁-C₁₈ alkyl, alkenyl or phenyl and
R⁵ is H, C₁-C₂₂ alkyl, C₂-C₂₂ alkenyl, or C₆-C₁₀ aryl.

Preferred trialkanolamines are those in which Rₐ³, R_{b}³ are, each independently of the other, H or methyl, and y=1.

Examples of preferred alkanolamines according to the general formula are: tri(hydroxyethyl)amine, tri(hydroxypropyl)amine.

The aforedescribed alkanolamines can be present preferably in an amount within the range from 0.01 to 1.0 parts by weight, in particular from 0.1 to 0.5 parts by weight, per 100 parts by weight of polymer and are preferably used in combination with perchlorates and perfluoroalkanesulphonates.

### Hydrotalcites

The hydrotalcites optionally present in the compositions of the invention can be described by the general formula: 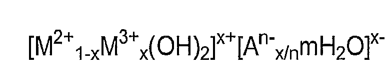 wherein M²⁺ represents at least one bivalent metal cation of the group consisting of Mg, Zn, Ni, Ca; M³⁺ represents at least one trivalent metal cation of the group consisting of Al, Fe; Aⁿ⁻ is an anion having a valency comprised between 1 and 4; x and m represent positive numbers which satisfy the following expressions
0.2<x≤ 0.33
m>0

In the general formula above, Aⁿ represents an anion selected from the group consisting of CO₃²⁻, OH⁻, HCO³⁻, CIO⁻₄, an acetate ion(-), a salicylate ion(-), a tartrate ion(2-),

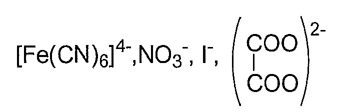

The preferred hydrotalcites of the invention are those in which Aⁿ⁻ is selected from CO₃²⁻, OH⁻.

The preferred empirical formulas for hydrotalcite considered for the invention are:

Mg₆Al₂(OH)₁₆CO₃.4H₂O

Mg₄Al₂(OH)₁₂CO₃.3H₂O

The aforedescribed hydrotalcites can be present in the composition of the invention preferably in an amount from 0.1 to 3 parts by weight, in particular from 0.2 to 1 parts by weight, per 100 parts by weight of halogen-containing polymer.

### Zeolites

The zeolites optionally present in the compositions of the invention can be described by the general formula:

M_{q/a} [(AlO₂)_{q} (SiO₂)ᵣ] wH₂O

in which a is the charge on the cation M,
M is an element of the alkali or alkaline-earth metal group, in particular Na, K, Mg, q is a number greater than or equal to 2,
the q/r ratio is a number greater than or equal to 0.4, being preferably a number between 0.4 and 10.5, and w is a number between 0 and 300.

The preferred zeolites, optionally present in the composition of the invention, are described in "Atlas of Zeolite Structure Types", W. M. Meier and D. H. Olson, Butterworths, 3rd Edition, 1992.

Particularly preferred are those zeolites having a particle size mainly within the range from 0.5 to 10 micron.

The preferred zeolites, which are known *per* se, have an effective mean cavity diameter of 3-5 A and can be prepared by known methods.

Also particularly preferred are zeolites of type NaA, which have an effective mean cavity diameter of 4 Å, and are hence known as 4A zeolites, indicated by the formula:

Na₁₂ Al₁₂ Si₁₂ O₄₈·27H₂O

Particular preference is given to those zeolites satisfying the aforestated general formula, known as X zeolites and indicated by the formula

(Na₂,Ca,Mg)₂₉ Al₅₈ Si₁₃₄ O₃₈₄·240H₂O

The zeolites optionally present in the composition of the invention are present preferably in an amount from 0.1 to 3 parts by weight, more preferably from 0.2 to 1 parts by weight, per 100 parts by weight of polymer.

### Polyols

Among the polyols, optionally present in the composition of the invention, the following are preferred:
pentaerythritol, dipentaerythritol, tripentaerythritol, bistrimethylolpropane, bistrimethylolethane, trimethylolpropane, inosite, polyvinyl alcohol, sorbitol, maltite, isomaltite, lactite, licasine, mannitol, lactose, leucrose, tris(hydroxyethyl)isocyanurate, palatinite, tetramethylolcyclohexanol, tetramethylolcyclopentanol, tetramethylolcyclopyranol, glycerol, diglycerol, polyglycerol, thiodiglycerol, or 1-0-a-D-glycopyranosyl-D-mannitol dihydrate.

Most preferred of these compounds are tris(hydroxyethyl)isocyanurate (THEIC), pentaerythritol, dipentaerythritol, trimethylolpropane, bistrimethylolpropane, sorbitol. The polyols, if present, are present preferably in an amount within the range from 0.01 to 2 parts by weight, more preferably from 0.1 to 1 parts by weight, per 100 parts by weight of halogen-containing polymer.

### Hydrates and oxides of alkali and alkaline-earth metals

Of the hydrates and oxides of alkali and alkaline-earth metals, optionally present in the composition of the invention, the following are preferred:
lithium oxide, sodium oxide, potassium oxide, magnesium oxide, calcium oxide and lithium hydroxide, sodium hydroxide, potassium hydroxide, magnesium hydroxide, calcium hydroxide.

The hydrates and oxides of alkali and alkaline-earth metals, if present, are preferably in an amount within the range from 0.1 to 3 parts by weight, more preferably from 0.2 to 1 parts by weight, per 100 parts by weight of polymer.

### Phosphites

The phosphites, optionally present in the composition of the invention, are preferably organic phosphites of general formula P(OR)₃, in which the radicals R are identical or different and can be C₆-C₁₈ alkyl, C₆-C₁₈ alkenyl, C₅-C₇ cycloalkyl. Also included as preferred in the invention are acid phosphites of general formula P(OH)R₂, in which the radicals R are identical or different and selected from C₆-C₁₈ alkyl, C₆-C₁₈ alkenyl, phenyl, mono- or di-alkylphenyl, or C₅-C₇ cycloalkyl. Phosphites with the following general formula can also be present in the composition of the invention: 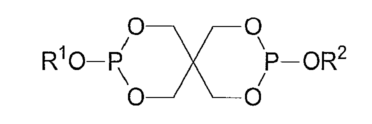 in which R¹ and R² are identical or different and are C₆-C₁₈ alkyl, C₆-C₁₈ alkenyl, phenyl, mono- or di-alkylphenyl, or C₅-C₇ cycloalkyl. Preferred of these latter phosphites are those in which R¹, R² = stearyl or

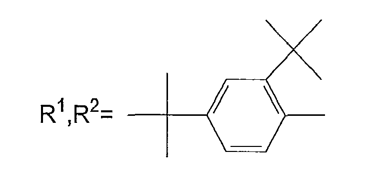

Phosphites with the following general formula can also be present:

(R¹Oh-PO-R²-OP―(OR³)₂

wherein R¹ and R³ are identical or different and are C₆-C₁₈ alkyl, C₆-C₁₈ alkenyl, phenyl, mono- or di-alkylphenyl, or C₅-C₇ cycloalkyl, R² is alkyl, alkyloxy, aryl or arylalkyl.

Each C₆-C₁₈ alkyl substituent present is, for example, n-hexyl, n-octyl, n-nonyl, decyl, dodecyl, tetradecyl, hexadecyl, octadecyl. Preferred are groups having from 8 to 18 carbon atoms.

The preferred phosphites in the present invention include:
tri(isodecyl)phosphite, tri(nonylphenyl)phosphite, tri(isotridecyl)phosphite, diphenyl isodecyl phosphite, di(isodecyl) phenyl phosphite, di(nonylphenyl) phosphite, tetraphenyl dipropyleneglycol diphosphite, 4,4' isopropylidenediphenol tetra(C₁₂-₁₅ alcohol) phosphite, bis(2,4-di-t-butylphenyl)pentaerythritol diphosphite, distearyl pentaerythritol diphosphite.

The phosphites, if present, are preferably in an amount within the range from 0.1 to 2 parts by weight, more preferably from 0.2 to 0.5 parts by weight, per 100 parts by weight of polymer.

Another aspect of the invention therefore concerns a halogenated resin comprising the composition according to the invention and a halogen-containing polymer.

The composition for stabilizing the halogen-containing polymers of the invention provides the resultant halogenated resin with excellent thermal stability properties, in particular an excellent long-term stability, and at the same time an excellent initial colour and good retention thereof in the final halogenated resin. Moreover, the composition of the invention enables the halogen-containing polymer to be stabilized even during processing steps.

The stabilized halogenated resin, preferably stabilized polyvinyl chloride (PVC), according to the present invention can be used in formulations for extrusion, injection moulding, blow moulding, calendaring, and can be formed into finished articles such as fibres, cables, ducting, engineering profiles and window profiles, pipes and connectors, film, sheets and bottles.

The composition of the present invention can be advantageously used in the production of transparent and non-transparent articles.

The formulation of the invention can be used to obtain rigid, semi-rigid or plasticized articles. For this purpose, the halogen-containing polymer, preferably polyvinyl chloride, can receive added plasticizer substances.

Examples of preferred plasticizer substances, in the case of polyvinyl chloride, are esters of C₄-C₂₀ alcohols such as adipates, phthalates, trimellitates, azelates, sebacates, benzoates, phosphates, epoxidized compounds, such as epoxidized soya oil, polymeric plasticizers such as polyesters, polyadipates, polyphosphates and the like. The plasticizer quantity varies widely according to the final use of the plasticized resin, said quantity being preferably within the range from 5 to 120 parts by weight per 100 parts by weight of halogen-containing polymer, preferably polyvinyl chloride (PVC), more preferably from 20 to 70 parts by weight per 100 parts by weight of halogen-containing polymer, preferably PVC.

The halogenated resin according to the invention, that is to say the formulation of the invention comprising the halogen-containing polymers, in particular polyvinyl chloride (PVC) or chlorinated polyvinyl chloride (C-PVC), can also contain additives selected from the group consisting of dyes, pigments, flame retardants, internal or/and external lubricants, impact modifiers, process adjuvants, light and ultraviolet radiation stabilizers, fluorescent whitening agents, fillers, gelling agents, antistatic agents, anti-fogging agents, expanders and other additives to prevent, mask or reduce deterioration caused by heating, ageing and exposure to light. Some embodiments of the invention follow, with examples of evaluation of the benefits deriving from the stabilizer composition of the invention, provided as non-limiting examples of the invention.

### EXAMPLES

### Example 1

### Preparation of the disodium adipate salt

146 g of adipic acid were solubilized in 250 ml of demineralised water under vigorous stirring. 78.9 g of sodium hydroxide pearls were slowly added and the mixture was allowed to react under stirring for 1 hour. 7.2 g of stearic acid were then added and the mixture was maintained under stirring for 1 hour, filtered through a Buchner funnel and the obtained filtrate was oven dried at 110°C overnight. At the end of the drying step, the product was ground. The final product obtained consisted of a powder which was classified so as to have D90 less than or equal to 40 µm and D50 less than or equal to 6 µm.

### Example 2

### Preparation of sodium caprylate

66.5 g of caprylic acid were added to 150 ml of demineralised water under vigorous stirring. 57.33 g of a 30% w/w sodium hydroxide solution were then slowly added and the mixture was allowed to react under stirring for 1 hour. The mixture was then filtered through a Buchner funnel and oven dried at 110°C overnight. At the end of drying, the product was ground. The final product obtained consisted of a powder which was classified so as to have D90 less than or equal to 40 µm and D50 less than or equal to 6 µm.

### Example 3

### Preparation of the composition of the invention disodium adipate/sodium caprylate 80:20

116.8 g of adipic acid and 33.2 g of caprylic acid were added to 200 ml of demineralised water under vigorous stirring. 242 g of a 30% w/w sodium hydroxide solution were then slowly added and the mixture was allowed to react under stirring for 1 hour. The mixture was then filtered through a Buchner funnel and oven dried at 110°C overnight. At the end of drying, the product was ground. The final product obtained consisted of a powder which was classified so as to have D90 less than or equal to 40 µm and D50 less than or equal to 6 µm.

### Example 4

### Preparation of the composition of the invention disodium adipate/sodium caprylate 95:5

111 g of adipic acid and 6.65 g of caprylic acid were added to 200 ml of demineralised water under vigorous stirring. 208.4 g of a 30% w/w sodium hydroxide solution were then slowly added and the mixture was allowed to react under stirring for 1 hour. The mixture was then filtered through a Buchner funnel and oven dried at 110°C overnight. At the end of drying, the product was ground. The final product obtained consisted of a powder which was classified so as to have D90 less than or equal to 40 µm and D50 less than or equal to 6 µm.

### Example 5

### Preparation of the composition of the invention disodium adipate/sodium stearate 80:20

1845 g of adipic acid, 550 g of stearic acid, 1091 g of sodium hydroxide pearls and 700 ml of demineralised water were allowed to react for 2 hours in a horizontal reactor (VT) and the mixture was heated to 90-105°C. The reaction water was evaporated under vacuum.

The product was then cooled to ambient temperature and ground. The final product obtained consisted of a powder which was classified so as to have D90 less than or equal to 40 µm and D50 less than or equal to 6 µm.

### Example 6

### Preparation of the composition of the invention disodium adipate/sodium stearate (93:7)

1388 g of adipic acid, 144 g of stearic acid, 771 g of sodium hydroxide pearls and 80 ml of demineralised water were allowed to react for 2 hours in a horizontal reactor (VT) and the mixture was heated to 100-105°C. The reaction water was evaporated under vacuum.

The product was then cooled to ambient temperature and ground. The final product obtained consisted of a powder which was classified so as to have D90 less than or equal to 40 µm and D50 less than or equal to 6 µm.

### Example 7

### Preparation of the composition of the invention disodium adipate/sodium acetate 80:20

116.8 g of adipic acid and 27.8 g of 99% w/w glacial acetic acid were added to 100 ml of demineralised water under vigorous stirring. 275 g of 30% w/w of sodium hydroxide solution were then slowly added and the mixture was allowed to react under stirring for 1 hour. 7 g of stearic acid were then added and the mixture was maintained under stirring for 1 hour, filtered through a Buchner funnel and oven dried at 110°C overnight. At the end of drying, the product was ground. The final product obtained consisted of a powder which was classified so as to have D90 less than or equal to 40 µm and D50 less than or equal to 6 µm.

### Example 8

### Preparation of the composition of the invention disodium adipate/sodium formate 80:20

116.8 g of adipic acid and 38 g of sodium formate were added to 100 ml of demineralised water under vigorous stirring. 213.7 g of a 30% w/w sodium hydroxide solution were then slowly added and the mixture was allowed to react under stirring for 1 hour. 7 g of stearic acid were then added and the mixture was maintained under stirring for 1 hour, filtered through a Buchner funnel and oven dried at 110°C overnight. At the end of the drying step, the product was ground. The final product obtained consisted of a powder which was classified so as to have D90 less than or equal to 40 µm and D50 less than or equal to 6 µm.

### Example 9

### Preparation of the composition of the invention disodium adipate/sodium caprylate 95:5

A different preparation of the sample i.e. no longer as a slurry but by direct reaction and drying.

1110 g of adipic acid, 66.5 g of caprylic acid, 625.2 g of sodium hydroxide pearls and 400 ml of demineralised water were allowed to react for 2 hours in a horizontal reactor (VT) and the mixture was heated to 90°C. The reaction water was evaporated under vacuum. 56 g of stearic acid were then added and the mixture was maintained under stirring for thirty minutes. The product was then cooled to ambient temperature and ground. The final product obtained consisted of a powder which was classified so as to have D90 less than or equal to 40 µm and D50 less than or equal to 6 µm.

### Example 10

### Evaluation of the composition of the invention

The ingredients in the amounts shown in table 1 were homogeneously mixed for the preparation of the stabilized PVC formulation.

The ingredient amounts in Table 1 are expressed in parts by weight per 100 parts by weight of PVC (phr).

Formulations 1, 2, corresponding to the formulations obtained with the compositions of examples 1 and 2 were for comparison; formulations 3, 4, corresponding to the formulations obtained with the compositions of examples 3 and 4, contained the stabilizing compositions of the invention.

### Test for evaluating thermal stabilization using the yellowing index (Yl)

The formulations were worked by lamination in a cylinder mixer for 3 minutes at 190°C. Rectangular test samples (1.5 x 24 cm) were cut from each sheet (of thickness 0.3-0.5 mm). The samples were then fixed on the sliding trolley of a Werner Mathis dynamic oven temperature-controlled at 190°C and subjected to heating. The trolley emerged from the oven at a rate of 0.5 cm every 2 minutes. At regular intervals, the degree of colour change was judged by reading the yellowness index (Yl) using an X-Rite QA2000 colorimeter, according to ASTM D-1925. According to said standard, the yellowness index (Yl) corresponded to a number calculated from spectrophotometric data that described the change in colour of a test sample from clear or white towards yellow.

This test for evaluating thermal stability, having been performed during a calendaring process, was representative of the thermal stabilization obtained during processing of the halogen-containing polymers.

### Thermal stability determination using congo red

The thermal stability was also determined by measuring the congo red (CR) value. The congo red value was obtained in accordance with DIN VDE 0472(614). According to this standard, 50 mg of PVC sample obtained from the sheet were placed in a test-tube and temperature-controlled at 180°C. The time required for the sample to release HCl was then measured by noting the moment in which the pH 3 colour change occurred on an indicator paper placed at the top of the test-tube.

**Table 1: Combination with calcium/zinc stabilizers**

| Table 1 | | | | |
|---|---|---|---|---|
| | **1** | **2** | **3** | **4** |
| PVC Solvin 258 RF | 00 | 100 | 100 | 100 |
| Calcium acetylacetonate | 0.3 | 0.3 | 0.3 | 0.3 |
| THEIC* | 0.3 | 0.3 | 0.3 | 0.3 |
| EBS** | 0.2 | 0.2 | 0.2 | 0.2 |
| Oxidized polyethylene wax | 0.3 | 0.3 | 0.3 | 0.3 |
| Processing aid | 0.8 | 0.8 | 0.8 | 0.8 |
| Arenox A10 | 0.2 | 0.2 | 0.2 | 0.2 |
| Zinc laurate | 0.2 | 0.2 | 0.2 | 0.2 |
| Calcium stearate | 0.5 | 0.5 | 0.5 | 0.5 |
| Zinc stearate | 0.8 | 0.8 | 0.8 | 0.8 |
| composition of preparation 1 | 1 | | | |
| composition of preparation 2 | | 1 | | |
| composition of preparation 3 | | | 1 | |
| composition of preparation 4 | | | | 1 |
| Congo Red (minutes) | 23 | 19 | 28 | 26 |
| Static thermal stability minutes | Yl | Yl | Yl | Yl |
| 0 | 4.5 | 1.0 | 2.6 | 2.8 |
| 18 | 22.3 | 30.8 | 19.5 | 20.6 |
| 36 | 56.9 | 97.0 | 57.8 | 57.8 |
| 54 | 81.7 | degr | 81.6 | 79.0 |
| 72 | degr | | 92.4 | 96.2 |
| 85 | | | deqr | degr |

| | | | | |
|---|---|---|---|---|
| * THEIC: tris(hydroxyethyl)isocyanurate ** ethylene bis stearamide | | | | |

It was noted that compositions 3 and 4 of examples 3 and 4 according to the invention resulted in a better initial colour than the composition with disodium adipate alone of example 1 and that for these same compositions, the colour was maintained for a longer time than the product comprising the comparative composition of example 2.

In addition, the congo red times of the 2 compositions added to the halogen-containing polymers were such as to confirm their better stabilization performances than compositions stabilized with disodium adipate alone. However, colour preservation and colour development over time with the containing polymers were such as to confirm their better stabilization performances than compositions stabilized with disodium adipate alone. However, colour preservation and colour development over time with the formulations of the invention were decidedly better than the formulations comprising the comparison compositions.

The yellowness indices (Yl) are shown graphically over time in Figure 1 to better illustrate the results of the invention.

### Example 11

The products indicated in table 2 were mixed homogeneously for the preparation of the stabilized PVC formulation.

The ingredient amounts in table 2 used in the tests are expressed as parts by weight per 100 parts by weight of PVC (phr).

Formulation 5, corresponding to the formulation comprising the composition of example 1 was for comparison, while formulations 6 and 7, corresponding to the formulations comprising the compositions of examples 5 and 6, were representative of the invention.

**Table 2: Combination with calcium/zinc stabilizers**

| Table 2 | | | |
|---|---|---|---|
| | **5** | **6** | **7** |
| PVC Solvin 258 RF | 100 | 100 | 100 |
| Calcium acetylacetonate | 0.3 | 0.3 | 0.3 |
| THEIC* | 0.3 | 0.3 | 0.3 |
| EBS** | 0.2 | 0.2 | 0.2 |
| Oxidized polyethylene wax | 0.3 | 0.3 | 0.3 |
| Processing aid | 0.8 | 0.8 | 0.8 |
| Arenox A10 | 0.2 | 0.2 | 0.2 |
| Zinc laurate | 0.2 | 0.2 | 0.2 |
| Calcium Stearate | 0.5 | 0.5 | 0.5 |
| Zinc stearate | 0.8 | 0.8 | 0.8 |
| composition of preparation 1 | 1 | | |
| composition of preparation 5 | | 1 | |
| composition of preparation 6 | | | 1 |
| Congo Red (minutes) | 23 | 31 | 30 |
| Static thermal stability | | | |
| minutes | Yl | Yl | Yl |
| 0 | 4.5 | 2.5 | 3.2 |
| 18 | 22.3 | 17.1 | 22.2 |
| 36 | 56.9 | 60.4 | 58.8 |
| 54 | 81.7 | 81.6 | 87.7 |
| 72 | degr | 91.8 | 99.8 |
| 85 | | 93.4 | 99.9 |
| THEIC: | | | |
| * tris(hydroxyethyl)isocyanurate | | | |
| ** ethylene bis stearamide | | | |
| | | | |

It was particularly evident in this case that the compositions of examples 5 and 6 both benefit the initial colour compared to the disodium adipate alone.

Also evident was the increase in thermal stability, both for the Yl values over time and for degradation time as represented by congo red.

The yellowness indices (Yl) are shown graphically over time in Figure 2 to better illustrate the results of the invention.

### Example 12

The products indicated in table 3 were mixed homogeneously for the preparation of the stabilized PVC formulation.

The ingredient amounts in table 2 are expressed as parts by weight per 100 parts by weight of PVC (phr). Formulations 8, 9, corresponding to the formulations comprising the compositions of examples 1 and 2 respectively, were for comparison, and formulation 10 contained the stabilizing composition of the invention of example 4. This example was representative of the thermal stabilization obtained from the invention when the calcium-zinc stabilizers of example 10 were substituted with stannic stabilizers.

**Table 3: Combination with stannic stabilizers**

| Table 3 | | | |
|---|---|---|---|
| | **8** | **9** | **10** |
| PVC Solvin 258 RF | 100 | 100 | 100 |
| MBS* | 10 | 10 | 10 |
| acrylic processing aid | 0.8 | 0.8 | 0.8 |
| lubricating acrylic processing aid | 0.8 | 0.8 | 0.8 |
| GDO** | 0.5 | 0.5 | 0.5 |
| Pentaerythritol distearate | 0.5 | 0.5 | 0.5 |
| Reatinor 807 | 1 | 1 | 1 |
| composition of preparation 1 | 0.5 | | |
| composition of preparation 2 | | 0.5 | |
| composition of preparation 4 | | | 0.5 |
| Congo Red (minutes) | 16 | 13 | 21 |
| Static thermal stability | | | |
| minutes | Yl | Yl | Yl |
| 0 | -12.9 | -6.9 | -13.3 |
| 18 | -6.0 | 8.0 | -7.9 |
| 36 | 30.3 | 71.4 | 14.3 |
| 54 | 82.3 | degr | 49.8 |
| 72 | degr | | 100.0 |
| 85 | | | degr |
| *MBS methylene bis steramide | | | |
| **GDO: glyceryl oleate | | | |

In this case also, the initial colour and its development over time were decidedly better by adding the composition of the invention of example 4. To better illustrate the results, the yellowness indices (Yl) over time are shown in Figure 3.

### Example 13

The products indicated in table 4 were mixed homogeneously for the preparation of the stabilized PVC formulation.

The ingredient amounts in table 4 are expressed as parts by weight per 100 parts by weight of PVC (phr). Formulation 11, corresponding to the formulation comprising the composition of example1 was for comparison, and formulations 12 and 13 contained respectively the stabilizing compositions of the invention of examples 7 and 8.

**Table 4: Combinations with stannic stabilizers**

| Table 4 | | | |
|---|---|---|---|
| | **11** | **12** | **13** |
| PVC Solvin 258 RF | 100 | 100 | 100 |
| MBS* | 10 | 10 | 10 |
| acrylic processing aid | 0.8 | 0.8 | 0.8 |
| lubricating acrylic processing aid | 0.8 | 0.8 | 0.8 |
| GDO** | 0.5 | 0.5 | 0.5 |
| Pentaerythritol distearate | 0.5 | 0.5 | 0.5 |
| Reatinor 807 | 1 | 1 | 1 |
| composition of preparation 1 | 0.5 | | |
| composition of preparation 7 | | 0.5 | |
| composition of preparation 8 | | | 0.5 |
| Congo Red (minutes) | 16 | 22 | 25 |
| Static thermal stability | | | |
| minutes | Yl | Yl | Yl |
| 0 | -12.9 | -10.6 | -11.5 |
| 18 | -6.0 | -3.78 | -4.73 |
| 36 | 30.3 | 14.86 | 11.13 |
| 54 | 82.3 | 55.59 | 46.2 |
| 72 | degr | 103.6 | 91.09 |
| 85 | | degr | |
| *MBS methylene bis steramide | | | |
| **GDO: glyceryl oleate | | | |

Although the initial colour was excellent and virtually comparable in all the cases, the colour was decidedly more long lasting over time for the formulations of the invention.

The yellowness indices (Yl) are shown graphically over time in Figure 4 to better illustrate the results given by the compositions of examples 7 and 8 compared with disodium adipate.

### Example 14

The ingredients indicated in table 5 were mixed homogeneously for the preparation of the stabilized PVC formulation. The ingredient amounts in table 5 are expressed as parts by weight per 100 parts by weight of PVC (phr). Formulation 14 was for comparison, formulations 15-20 contained the stabilizing composition of the invention of example 9. Specifically, formulation 15 always contained the same quantity by weight on the polymer compared to the comparison formulation, while formulations 16-20 were added to the polymer in lower amounts than the composition containing solely disodium adipate.

**Table 5: Combination with calcium-zinc stabilizers**

| Table 5 | | | | | | | |
|---|---|---|---|---|---|---|---|
| | **14** | **15** | **16** | **17** | **18** | **19** | **20** |
| PVC Solvin 258 RF | 100 | 100 | 100 | 100 | 100 | 100 | 100 |
| Calcium acetylacetonate | 0.3 | 0.3 | 0.3 | 0.3 | 0.3 | 0.3 | 0.3 |
| THEIC* | 0.3 | 0.3 | 0.3 | 0.3 | 0.3 | 0.3 | 0.3 |
| EBS | 0.2 | 0.2 | 0.2 | 0.2 | 0.2 | 0.2 | 0.2 |
| oxidized polyethylene wax | 0.3 | 0.3 | 0.3 | 0.3 | 0.3 | 0.3 | 0.3 |
| Processing aid | 0.8 | 0.8 | 0.8 | 0.8 | 0.8 | 0.8 | 0.8 |
| Arenox A10 | 0.2 | 0.2 | 0.2 | 0.2 | 0.2 | 0.2 | 0.2 |
| Zinc laurate | 0.2 | 0.2 | 0.2 | 0.2 | 0.2 | 0.2 | 0.2 |
| Calcium stearate | 0.5 | 0.5 | 0.5 | 0.5 | 0.5 | 0.5 | 0.5 |
| Zinc stearate | 0.8 | 0.8 | 0.8 | 0.8 | 0.8 | 0.8 | 0.8 |
| composition of preparation 1 | 1 | | | | | | |
| composition of example 9 | | 1 | 0.9 | 0.8 | 0.7 | 0.6 | 0.5 |
| Congo Red (minutes) | 24 | 35 | 33 | 30 | 27 | 25 | 22 |
| Static thermal stability minutes | Yl | Yl | Yl | Yl | Yl | Yl | Yl |
| 0 | 3.76 | 0.53 | 1.18 | 0.86 | 0.33 | 4.48 | 1.12 |
| 18 | 23.4 4 | 19.67 | 19.92 | 20.01 | 17.3 | 20.6 2 | 18.09 |
| 36 | 68.6 6 | 70.48 | 62.8 | 54.16 | 64.67 | 60.6 9 | 52.8 |
| 54 | 95.7 5 | 90.94 | 88.43 | 83.74 | 85.71 | 82.8 2 | 76.62 |
| 72 | degr | 104.9 | 100.4 | 98.31 | 95.67 | degr | degr |
| 85 | | 105.6 | 102.4 | degr | degr | | |

The effectiveness of the composition of the invention was evident not only at the same amounts as the composition with disodium adipate alone, but also when the stabilizing composition was added to the polymer in lower amounts than the comparison composition. The yellowness index (Yl) results are shown in Figure 5 and illustrate the high performance of the composition of the invention even when used in lower amounts than the comparison composition.

## Claims

1. A composition for stabilizing halogen-containing polymers comprising an alkali metal salt of adipic acid and an alkali metal salt of a carboxylic acid having from 1 to 22 carbon atoms.

2. The composition according to claim 1 wherein the alkali metal of the adipic acid salt is selected from the group consisting of sodium, potassium and lithium, preferably it is sodium.

3. The composition according to claim 1 or claim 2 wherein the alkali metal of the carboxylic acid salt having from 1 to 22 carbon atoms is selected from the group consisting of sodium, potassium and lithium, preferably it is sodium.

4. The composition according to any one of claims 1 to 3 wherein the carboxylic acid having from 1 to 22 carbon atoms is a carboxylic acid having a carbon atom number selected from the group 1-2, 8-22.

5. The composition according to claim 4 wherein the carboxylic acid having from 1 to 22 carbon atoms is selected from the group consisting of formic acid, acetic acid, lauric acid, stearic acid, stearine (mixture of palmitic and stearic acids), oleic acid, linoleic acid, linolenic acid, and caprylic acid.

6. The composition according to claim 5 wherein the carboxylic acid having from 1 to 22 carbon atoms is caprylic acid.

7. The composition according to any one of claims 1 to 6 wherein the composition for stabilizing halogen-containing polymers comprises disodium adipate and sodium caprylate.

8. The composition according to any one of claims 1 to 7 wherein the weight ratio of disodium adipate to sodium caprylate is within the range of 70:30 to 98:2, and preferably from 80:20 to 97:3.

9. The composition according to any one of claims 1 to 8 wherein the alkali metal salt of a carboxylic acid having from 1 to 22 carbon atoms is present in the composition in an amount within the range from 0.005 to 1.5 parts by weight, being preferably from 0.01 to 0.45 parts by weight per 100 parts of halogen-containing polymer (phr).

10. The composition according to any one of claims 1 to 9 wherein the alkali metal salt of adipic acid is present from 0.045 to 3.5 parts by weight, being preferably from 0.14 to 1.05 parts by weight per 100 parts by weight of the halogen-containing polymer (phr).

11. A process for preparing the composition according to any one of claims 1 to 10, comprising the steps of:
a) preparing a mixture of an alkali metal salt of adipic acid and an alkali metal salt of a carboxylic acid having from 1 to 22 carbon atoms;
b) removing the water from the mixture thus obtained and drying the product thus obtained;
c) grinding the dried product, to obtain a powder with a particle size distribution D90 being less than or equal to 40 µm and a D50 less than or equal to 6 µm.

12. A halogenated resin in rigid formulation comprising a halogen-containing polymer and a stabilizing composition according to any one of claims 1 to 10.

13. A halogenated resin in plasticized or semi-rigid formulation comprising a halogen-containing polymer, at least one plasticizing substance and a stabilizing composition according to any one of claims 1 to 10.

14. The halogenated resin according to claim 12 or claim 13 wherein the halogen-containing polymer is polyvinyl chloride (PVC).

15. The halogenated resin according to any one of claims 12-14 wherein the resin comprises one or more conventional stabilizing and co-stabilizing agents selected from the group consisting of metal soaps, organotin compounds, perchlorates and perfluoroalkanesulphonates, sodium adipate, antioxidants, alkanolamines, zeolites and hydrotalcites, hydrates and oxides of alkali and alkaline-earth metals, polyols, organic phosphites, ß-aminocrotonic acid esters and organic co-stabilizers such as β-diketones, acetylacetonates, dihydropyridines, polydihydropyridines and uracil derivatives.

16. The halogenated resin according to any one of claims 12-15 wherein the resin comprises additives selected from the group consisting of dyes, pigments, flame retardants, internal or/and external lubricants, impact modifiers, process adjuvants, light and ultraviolet radiation stabilizers, fluorescent whitening agents, fillers, gelling agents, antistatic agents, anti-fogging agents, expanders and other additives to prevent, mask or reduce deterioration caused by heating, ageing and exposure to light.
